(19) Europäisches Patentamt

European Patent Office

Office européen des brevets

(11) **EP 1 901 501 A2**

(12) **EUROPEAN PATENT APPLICATION**

(43) Date of publication:
   **19.03.2008 Bulletin 2008/12**

(51) Int Cl.:
   ***H04L 12/58*** *(2006.01)*

(21) Application number: **07253617.0**

(22) Date of filing: **12.09.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK YU**

(30) Priority: **12.09.2006 US 825386 P**

(71) Applicant: **Wireless Services Corp.**
   **Seattle, WA 98004 (US)**

(72) Inventor: **Setlow, Larry A.**
   **Redmond, Washington 98052 (US)**

(74) Representative: **Bailey, Sam Rogerson et al**
   **Mewburn Ellis LLP**
   **York House**
   **23 Kingsway**
   **GB-London WC2B 6HP (GB)**

(54) **High capacity campaign system**

(57)   A method and system for quickly and reliably processing a high volume of messages. In one embodiment, text messages are submitted by mobile phone subscribers to cast votes. The votes are recorded and replies are returned in near real time by updating a state in active memory for each subscriber that submits a message. To provide scaling and reliability, a message summary is also used to distribute the processing over a number of master-slave pairs that are each defined to access certain messages based on one or more message characteristics, such as an area code of the submitting subscriber. Campaign processing rules are applied to the summary to produce a subscriber state change, which indicates a corresponding reply to be returned. Billing and other administrative operations are done on a post processing basis so as not to slow the vote processing.

Fig. 2

**Description**

The present invention is directed to managing messages submitted by users of electronic devices, and more specifically to managing selections, such as votes, submitted by users and returning replies to users at a high rate and volume in a reliable and scalable manner.

BACKGROUND

Text messages, multimedia messages, and other messages have become an increasingly popular method of communication, especially with mobile devices such as cellular telephones, personal data assistants (PDAs), and the like. Such messages are generally inexpensive to send and receive relative to some voice communications, and can be communicated to multiple electronic devices at the same time. Messages can be exchanged across a variety of protocols, including those for telephones, email systems, web-based message portals, and other network systems. Some exemplary message protocols include short message service - peer to peer (SMS-PP), multimedia service (MMS), simple network paging protocol (SNPP), simple mail transport protocol (SMTP), post office protocol (POP), wireless content transport protocol (WCTP), hypertext transport protocol (HTTP), and the like.

Messages may also be more efficient to use than voice calls to submit a vote, a purchase choice, or another selection. Selections submitted in many messages can be recorded in a database for further processing. However, conventional databases are relatively slow for processing very large volumes of messages (e.g., 10,000 messages per second). Multi-threaded operation is often used to improve performance over single-threaded operation, but database operations are still relatively slow even with multi-threaded operations. A large volume of messages may be expected from a mass audience in limited time periods, such as during a voting campaign, an advertising campaign, a sweepstakes campaign, and the like. Each submitted message should be accurately accounted without missing any submission, and a reply should be returned on a near-real-time basis to confirm submissions to users. Accuracy, reliability, and fast turn-around are valuable for a successful campaign.

BRIEF DESCRIPTION OF THE DRAWINGS

FIGURE 1 shows a functional block diagram of an exemplary server according to one embodiment of the invention;

FIGURE 2 shows a functional block diagram of an exemplary architecture according to one embodiment of the invention;

FIGURE 3 is a communication sequence diagram according to one embodiment of the present invention;

FIGURE 5 is a flow diagram illustrating exemplary logic for initializing configuration information according to one embodiment of the present invention;

FIGURE 6 is a flow diagram illustrating exemplary logic for pre-processing an incoming message according to one embodiment of the present invention;

FIGURE 7 is a flow diagram illustrating exemplary logic for decision processing based on one or more rules according to one embodiment of the present invention;

FIGURE 8 is a flow diagram illustrating exemplary logic for determining an action to take in response to the incoming message according to one embodiment of the present invention; and

FIGURE 9 is a flow diagram illustrating exemplary logic for providing an outgoing reply in response to the incoming message according to one embodiment of the present invention.

DETAILED DESCRIPTION

The present invention will now be described with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

Throughout the specification, the term "connected" means a direct connection between the things that are connected, without any intermediary devices or components. The term "coupled," or "in communication with" means a direct connection between the things that are connected, or an indirect connection through one or more either passive or active intermediary devices or components. The meaning of "a," "an," and "the" include plural references. The meaning of "in" includes "in" and "on." The term "or" is an inclusive "or" operator, and includes the term "and/or," unless the context clearly dictates otherwise. The phrase "in one embodiment," as used herein does not necessarily refer to the same embodiment, although it may. Similarly, the phrase "in another embodiment," as used herein does not necessarily refer to a different embodiment, although it may. The term "based on" is not exclusive and provides for being based on additional factors not described, unless the context clearly dictates otherwise. The term "user" can include a mobile device user, an online service subscriber, a computer user, and/or other person using an electronic device. The term "message" can include a copy of a message.

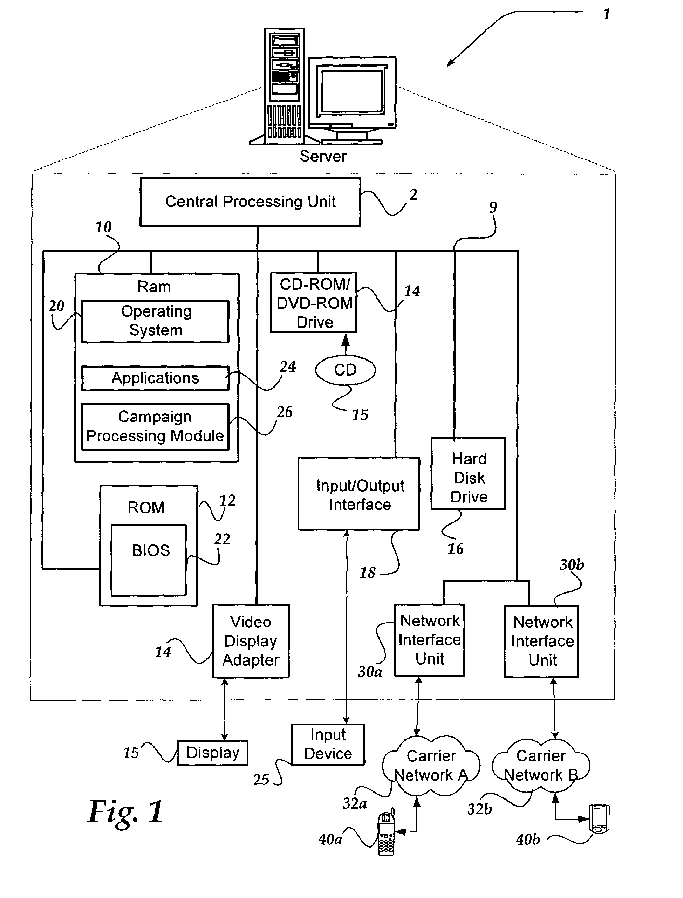

Briefly stated, the invention is direct to a method and system for managing selections, such as votes, submitted by users and returning replies to users at a high rate and volume in a reliable and scalable manner. High performance and reliability can be achieved with a single-threaded operation. FIGURE 1 shows a functional block diagram of an exemplary server 1, according to one embodiment of the invention. Server 1 may include many more components than those shown. The components shown, however, are sufficient to disclose an illustrative embodiment for practicing the invention. Client devices can be similarly configured. Client devices can include, but are not limited to, mobile devices (e.g., cell phones), PDAs, personal computers (PCs), other servers, voice mail systems, and the like. A recipient can also receive messages via other forms of communication, such as fax, voice mail, postal mail, and the like that may be converted to a form that can be utilized by the invention.

FIGURE 1 shows a functional block diagram of an exemplary server according to one embodiment of the invention. Server 1 includes a processing unit 2, a video display adapter 4 that can drive a display 5, and a mass memory, all in communication with each other via a bus 9. The mass memory generally includes RAM,10, ROM 12, and one or more permanent mass storage devices, such as an optical drive 14 that can read a machine readable medium such as a CD 15, a hard disk drive 16, a tape drive, a floppy disk drive, and/or the like. The mass memory stores an operating system 20 for controlling the operation of server 1. Any general-purpose operating system may be employed. A basic input/output system ("BIOS") 22 is also provided for controlling low-level operation of server 1.

The mass memory also includes computer-readable media, such as volatile, nonvolatile, removable, and non-removable media implemented in any method or technology for storage of information, such as computer readable instructions, data structures, program modules, or other data. Examples of computer-readable media include RAM, ROM, EEPROM, flash memory, or other memory technology, CD-ROM, digital versatile disks (DVD), or other optical storage, magnetic cassettes, magnetic tape, magnetic disk storage, or other magnetic storage devices, or any other medium which can be used to store the desired information and which can be accessed by a computing device.

The mass memory also stores program code and data. One or more applications 24 are loaded into mass memory and run on operating system 20. Examples of application programs include database programs, schedulers, transcoders, calendars, web services, word processing programs, spreadsheet programs, email programs, and so forth. Mass storage may further include applications such as a message processing module 26 for managing communication to and from clients.

Server 1 also includes input/output interface 18 for communicating with external devices, such as a mouse, keyboard, scanner, or other input device 19. Server 1 can communicate with a local network, the Internet, a telephone network, or some other communications network via network interface units 30a and 30b, which are constructed for use with various communication protocols including transmission control protocol / Internet protocol (TCP/IP), user datagram protocol (UDP), code division multiple access (CDMA), time division multiple access (TDMA), global system for mobile communications (GSM), Institute for Electrical and Electronics Engineers (IEEE) 802.11, IEEE 802.16 (WiMax), SMS, general packet radio service (GPRS), Wireless Application Protocol (WAP), and the like. Network interface units 30a and 30b are sometimes known as transceivers, transceiving devices, network interface cards (NICs), and the like. The network interface units can facilitate communications between communication carriers and/or computing devices that conform to the same or differing communication protocols. For example, network interface units 30a and 30b are illustrated as communicating with networks 32a and 32b, which may comprise cellular telephone carrier networks, the Internet, and/or other networks. Networks 32a and 32b provide communication services for clients such as clients 40a and 40b.

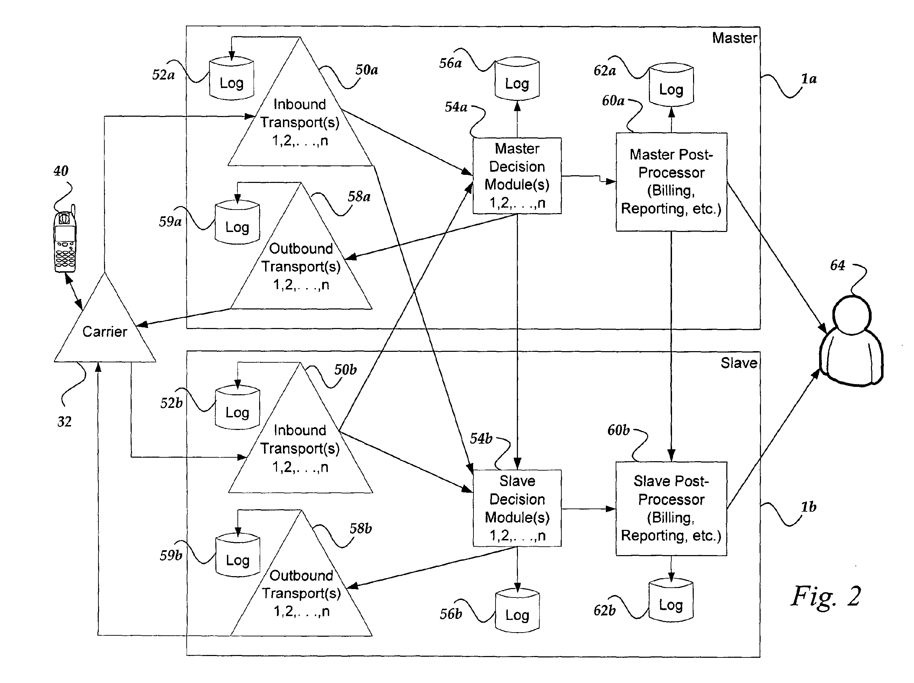

FIGURE 2 illustrates an overall architecture of an exemplary embodiment of the present invention. By way of example, this embodiment is described in terms of a voting campaign for a television program. Viewers are asked to submit votes for one of the participants in a televised contest, such as a talent contest. The votes may be submitted as text messages with mobile devices, such as a mobile device 40, through the corresponding subscriber's communications carriers, such as carrier 32. The submitted text messages are addressed to a specific short code, phone number, or other identifier of the televised contest or other campaign.

Carrier 32 is in communication with at least two message processors 1a and 1b. The message processors may be separate servers in different locations that communicate through a wide area network such as the internet. In one alternative, the message processors may be separate software modules running on a single machine. In the event one message processor fails, the other(s) take over processing. One message processor is generally selected as a master message processor 1a. One or more slave message processor(s) 1b run in parallel, and can continue with message processing if the master message processor fails.

Vote messages submitted through carrier 32 are communicated to an inbound transport module of each message processor. In this embodiment, carrier 32 is in communication with inbound transport module 50a of master message processor la, and in communication with inbound transport module 50b of slave message processor 1b. Each related set of inbound transport modules, such as inbound transport modules 50a and 50b, may be preconfigured to be associated with a specific short code, so that incoming messages addressed to the specific short code are routed to the corresponding inbound transport modules in the master and slave(s). In addition, or alternatively, the area code, cellular tower identifier, or other identifier can be used to segment the voters and route the incoming messages to predefined inbound transport modules. Thus, master message processor 1a can have a number of master inbound transport modules (e.g., 1,2, ..., n) for various segments of traffic. Similarly, slave message processor 1b can have a number of slave inbound transport modules (e.g., 1,2, ..., n) for the various segments of traffic.

Mobile device identifiers and/or other message information may also be used by the inbound transport modules to generate a summary code, such as a hash value, to increase the speed of subsequent processing. Each inbound transport module includes, or is in communication with, an inbound log module 52a and 52b, respectively. The inbound log modules store information about incoming vote messages, such as a message identifier, a time stamp, a carrier identifier, a subscriber identifier, and the like. The incoming vote messages are also tagged with a transport identifier to indicate where a reply should be sent.

Each inbound transport module is in communication with a master decision module 54a and at least one slave decision module 54b. The decision modules are preconfigured to access incoming votes from preselected inbound transport modules. Accordingly, a number of decision modules (e.g., 1,2, ..., n) correspond to the segments of traffic. On system start-up, the inbound transport modules wait for the decision modules to connect to the inbound transport modules. When decision modules connect to inbound transport modules, the decision modules declare a particular segment of traffic for which the decision modules serve as destinations. For example, a decision module may indicate that it is pre-programmed to process messages from one or more particular area codes. The decision modules also indicate whether the decision modules believe they are the master decision module or a slave decision module for that segment of traffic. Once an inbound transport module has a master decision module for each traffic segment, the inbound transport module connects to the carrier. In this embodiment, a decision module may then access messages from master and slave inbound transport modules that are associated with a predefined hash value, which may result from a predefined area code and/or other traffic segment identifier(s).

In one embodiment, a decision module includes an incoming queue to buffer a number of incoming messages, or summaries of messages, from the inbound transport module. The decision modules evaluate the content of the messages, or summaries of the messages, to determine the vote, registration request, and/or other content of the messages. The decision modules also determine a corresponding reply to send back to the mobile device that submitted the message and/or other action to take. As discussed in further detail below, the action to take is indicated as a change in state associated with the submitting subscriber. A decision module includes an outgoing queue to buffer a number of outgoing reply instructions.

Master decision module 54a is also in communication with slave decision module 54b so that the slave processor (s) will know which messages were processed by the master decision module. If the slave processor(s) determine that the master decision module has not processed one or more messages, one of the slave processors may take over as the master. Each decision module includes, or is in communication with, a decision log module 56a and 56b, respectively. The decision log modules store information about a decision made for corresponding message, such as the message identifier, time stamp, state change, and the like.

Instructions for reply messages are communicated to outbound transport modules. In this embodiment, master decision module 54a is in communication with a master outbound transport module 58a. Similarly, slave decision module 54b is in communication with a slave outbound transport module 58b. A number of outbound transport modules (e.g., 1,2, ..., n) can be associated with the various segments of traffic. However, unlike the inbound transport modules, the decision modules do not communicate with both master and slave outbound transport modules. This embodiment presumes that master decision module 54a will instruct its corresponding outbound transport module 58a to send a reply message and confirm to slave decision module 54b that the instruction was sent. In this case, master processing module 1a is functioning properly, so there is no need for slave decision module 54b to send a reply using outbound transport module 58b. Conversely, if master processing module 1a fails, slave decision module 54b will not receive a confirmation from master decision module 54a. In that case, slave decision module 54b instructs its corresponding outbound transport module 58b to send a reply. Since the slave decision module presumes that the master outbound transport module has failed along with the master decision module, there is no need for the slave decision module to instruct the master outbound transport module to send a duplicate reply.

However, those skilled in the art will recognize that other embodiments may use independently controlled outbound transport modules, which may benefit from cross communication between the decision modules and multiple outbound transport modules. In another embodiment, each outbound transport module may be combined with the corresponding inbound transport module for a transceiver module. For instance, the transport mechanism may be implemented with characteristics of an SMPP transceiver bind. Transceiver modules will generally cross communicate with the master and slave decision modules.

The outbound transport modules are in communication with carrier 32 to send replies to corresponding mobile devices that submitted the votes. An outbound transport module generally connects to the carrier as soon as any decision module has connected to the outbound transport module. Each outbound transport module also includes, or is in communication with, an outbound log module 59a and 59b, respectively. The outbound log modules store information about replies made for a corresponding decision, such as the incoming message identifier, state change, outbound reply message identifier, time stamp, and the like.

The architecture described above enables a large volume of incoming messages (e.g., votes) to be recorded and processed reliably and quickly, based on producing a state change associated with the subscribers. A correspondingly large volume of replies are reliably returned to subscribers in near real-time response to their votes. However, there are other administrative operations that are generally needed in processing the messages. These operations include generating billing records, producing system performance reports, and the like. These administrative operations have generally been performed with a database at the time of processing the messages. However, such database operations significantly reduce the speed and volume of message and reply processing. Thus, embodiments of the present invention perform these operations separately from the message and reply processing. Post-processing modules buffer the message processing decisions and perform the administrative operations without slowing the message and reply processing. Accordingly, master decision module 54a is in communication with a master post-processing module 60a. Similarly, slave decision module 54b is in communication with a slave post-processing module 60b. The master post-processing module is also in communication with the slave post-processing module to indicate when the master post-processing module has completed its administrative operations associated with each message and reply. The slave post-processing module takes over the administrative processing if the master post-processing module fails. The post-processing modules may produce paper and/or electronic bills, reports, and/or other administrative data for campaign organizers, subscribers, service managers, advertisers, and the like. Thus, each post-processing module is in communication with an administrative data recipient 64, who may utilize the administrative data.

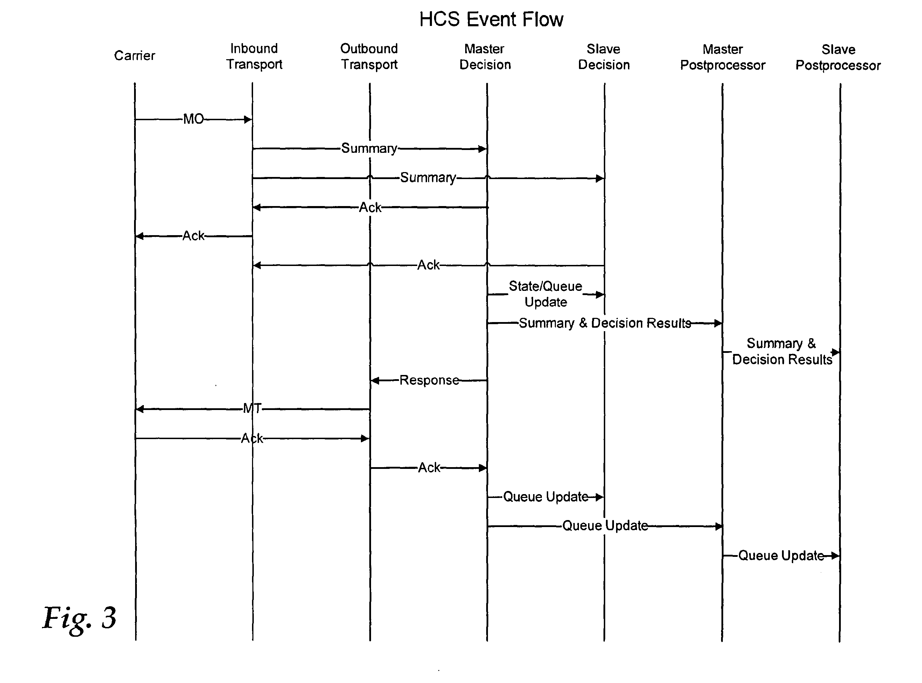

FIGURE 3 is an exemplary communication sequence diagram illustrating a high capacity system (HCS) event flow for one embodiment of the present invention. Modules are identified across a top row, and a vertical line corresponding to each module. A mobile originated (MO) message is transmitted from the carrier to the inbound transport module. The inbound transport module generates a summary, which may comprise a hash value, and transmits the summary to the master decision module. The inbound transport module also transmits a copy of the summary to one or more slave decision modules. The master and slave decision modules acknowledge receipt of the summary to the inbound transport module, which acknowledges receipt of the MO message to the carrier.

The master decision module evaluates the summary according to predefined rules of the campaign to update one or more states that are associated with the subscriber that submitted the message. For example, a user state may indicate that the subscriber is not yet registered to vote in the current campaign, that the subscriber is registered to vote, or that the subscriber already voted. A vote state may indicate which selection the subscriber voted for, such as which television performer the subscriber voted for. Other information may include a vote count, indicating the number of times a subscriber voted, a premium flag, indicating a priority level of the subscriber, and other data that the decision module may use to process the summary data. The master decision module also updates the incoming queue to indicate that the current message summary data has been processed.

The master decision module transmits the message summary data and state update data to the slave decision module to notify the slave decision module that the message summary data for a submitted message was processed, and that the slave decision module need not process the message summary data. If the slave decision module did not receive this notification within a predefined period, the slave decision module assumes that the master decision module failed. The slave decision module would then take over as the new master decision module and process the summary data.

The master decision module also transmits the message summary data and state data (decision results) to the master post-processor. The master post-processor relays the summary data and state data to the slave post-processor. The post processors perform their administrative operations using one or more databases, but without further delaying replies to the subscribers.

The master decision module transmits a response to the master outbound transport module. More specifically in this embodiment, the response is provided to the outgoing queue of the decision module for accessing a reply template based on the state values determined, and for delivery to the outgoing transport module that corresponds to the tag provided by the incoming transport module when the incoming message was received. The outgoing queue also ensures that the replies are delivered in priority order, and can retry to send the response if the outgoing transport module does not acknowledge receipt of the response. In this embodiment, the decision module also load-balances outgoing traffic across the available outbound transport modules that can pass traffic to the target carrier. In this embodiment, the decision module sends outgoing traffic to the outbound transport module with the fewest outstanding messages.

The outbound transport module transmits a mobile target (MT) reply to the carrier for delivery to the subscriber's mobile device. The reply includes text such as an indication that the subscriber has not yet registered, a confirmation of the subscriber's vote, an indication that the subscriber has voted too many times, and/or other reply information. The carrier acknowledges the reply to the outbound transport module, which acknowledges delivery of the reply to the master decision module. The master decision module can then update the outgoing queue to remove that reply from the list, as having been delivered. No further retries would be needed. The master decision module also notifies the slave decision module that the reply was delivered, so the slave decision module can remove that reply from the slave outgoing queue. Similarly, the master decision module notifies the master post-processor that the reply was delivered, so that the master post-processor can register a cost to the subscriber or campaign organizer, update campaign statistics, or otherwise perform other administrative processing. The master post-processor notifies the slave post-processor upon completion, so that the slave post-processor may remove the task from its queue.

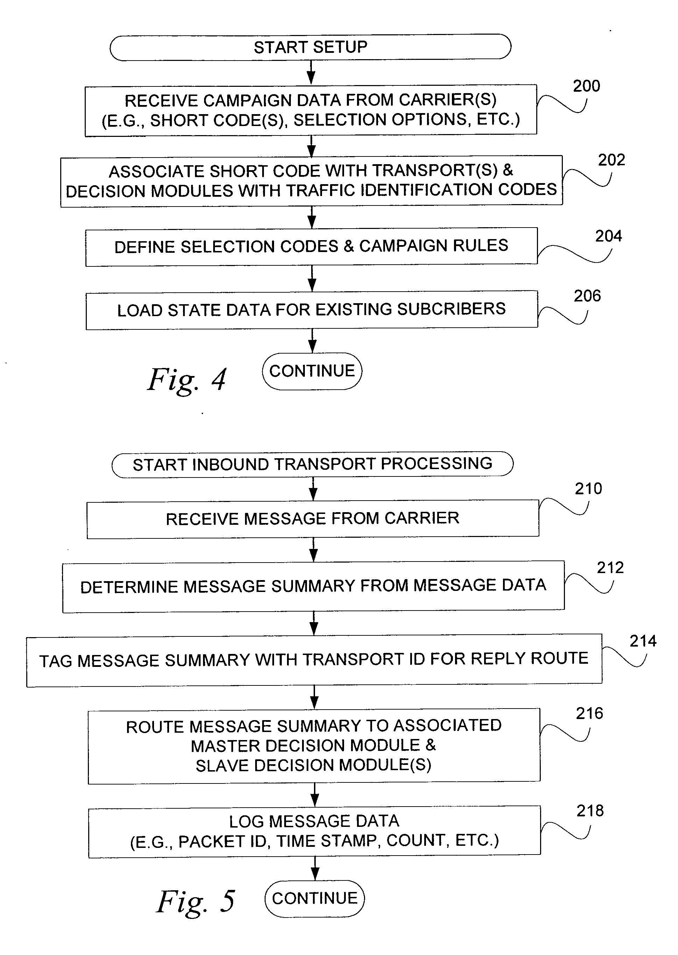

Further detail is provided below with regard to exemplary logic flow diagrams shown in FIGURES 4 through 8. FIGURE 4 is a flow diagram illustrating exemplary logic for configuring one embodiment of a high capacity campaign system. At an operation 200, the campaign system receives campaign data from one or more carriers involved in the campaign. The carrier(s) may be coordinated by a television producer, product manufacturer, government agency and/or other campaign organizer. Campaign data may include one or more short codes to which subscribers can submit their messages, selection options available to the subscribers (e.g., messages that subscribers can submit), default states for new subscribers, rules for updating subscriber states, black lists and/or white lists of subscribers to reduce spam, counters, pricing data, and/or other data. State characteristics that can be set before or during the campaign for any subscriber may also include opt in and out options, a number of state-changing messages allowed from the subscribers during the present campaign, and reply messages to be sent to the subscribers during the present campaign.

At an operation 202, campaign short codes are associated with inbound transports for routing incoming messages. The decision modules are also associated with traffic identification codes, such as area codes, to segment the routing of incoming traffic to decision modules. The decision modules are also pre-assigned as a master decision module or a slave decision module. The campaign data rules are entered into the campaign system at an operation 204. This may comprise entering selection codes available to the subscribers, state change rules, and other campaign data discussed above. The campaign data may be programmed into the system with customized hard code and/or through a user interface that is available to the campaign coordinator. At an operation 206, any existing state data may be loaded for existing subscribers. For example, some subscribers may have participated in a prior campaign and indicated that they wish to participate in any future campaign. The state data and campaign data are generally loaded into memory, such as RAM for faster processing than disk-based databases.

FIGURE 5 is a flow diagram illustrating exemplary logic for inbound transport processing in one embodiment of a high capacity campaign system. At an operation 210, the inbound transport module receives a submitted message from the carrier. The message is directed to the short code associated with the inbound transport module. Upon receipt of the message from the carrier on behalf of a subscriber, the inbound transport module determines which traffic segment the message belongs to, at an operation 212. The inbound transport module determines a summary from the message data, such as the subscriber's phone number, the short code, a premium service flag, the content of the message, and/or other header data. For example, the message summary may comprise a hash value of some, or all, of the message data. The hash value, a range of values, or other calculated value may be associated with particular decision modules. For instance, the hash value may be divided by the number of master and slave decision modules, and the remainder may be associated with particular decision modules. Via the hash value(s), the message traffic can be segmented in a variety of ways and with differing granularities to improve message processing speed and to scale the message processing volume. For instance, without having to check each message element, the generated hash value may enable a particular decision module to access those messages that are from a predefined area code, that are sent to a particular short code, from subscribers that have paid for a premium service, and have submitted a particular vote. Any combination of message data can be used to segment the message traffic.

At an operation 214, the inbound transport module tags the message summary with a transport identifier, so that the corresponding reply will be routed back through the outbound transport module that is associated with the inbound transport module. Alternatively, the transport identifier may indicate that the reply should be routed back through the inbound transport module if the inbound transport module is a transceiver module. In one embodiment, the transport identifier may be implemented as a message ID for processing within the campaign system. Transport modules have configuration data that provide bind information, as well as instructions regarding which message stream and carrier IDs to include in the message ID. Message IDs are intended to be unique even if the inbound transport module restarts. One mechanism by which this can be achieved is for the message ID to be 64 bits, with approximately the top 10 bits comprising the stream ID, the next 32 bits initialized on transport element startup to the number of seconds since 1 January 1970, and the remainder initialized on startup to 0. This message ID is then incremented one value for each message handled by the stream. As long as the inbound transport module does not restart twice in the same second, and the stream does not process more than 4.2M messages/second, these IDs will be unique.

The inbound transport module routes the message summary to the associated master decision module and slave decision module(s), at an operation 216. In one embodiment, the inbound transport module does not acknowledge receipt of the message until all associated decision modules have been notified and one decision module has acknowledged receipt of the message summary. If all decision modules that declared themselves as destinations of the traffic segment have dropped their connections, the inbound transport element will save the message on disk, in two locations, to be processed when such a decision module destination is available.

The inbound transport module logs message data at an operation 218. For example, a packet ID, time stamp, message count, and/or other data may be logged. In one embodiment, two categories of count data is maintained by the inbound transport module; (i) messages received and message summaries sent, and (ii) acknowledgements sent or received. Examples include:

On the carrier-side interface, inbound transport modules may maintain the following counts:

- total messages received from the carrier(s)
- total messages acknowledged to the carrier(s)
- per-carrier messages received
- per-carrier messages acknowledged
- per-bind messages received
- per-bind messages acknowledged

On the decision- module-side interface, inbound transport modules may maintain the following counts (under normal operation, these numbers may be double the number of messages received on the carrier-side interface):

- total message summaries sent to the decision module(s)
- total messages acknowledged from the decision module(s)
- per-segment messages sent to those decision modules associated with the traffic segment
- per-segment messages acknowledged from those decision module associated with the traffic segment
- per-decision module messages sent to each decision module
- per-decision module messages acknowledged from each decision module

In this exemplary embodiment, inbound transport module statistics can be reset by resetting the connection for connection-specific statistics, or restarting the transport module for transport module-wide statistics. The above counters are generally made available via TCP at a predefined port. The post-processing modules may connect to this port for billing, reporting, and/or other post processing. While connected, the post-processing module may issue periodic requests for the traffic-handling modules (e.g., inbound and outbound transport modules) to report all its counters. The traffic-handling modules will respond with a time stamp for which the data are being returned, and a complete set of pairs of counter identifier and counter value for those counter listed above. The data may be logged and accessed for one campaign or for a number of campaigns running concurrently or in sequence.

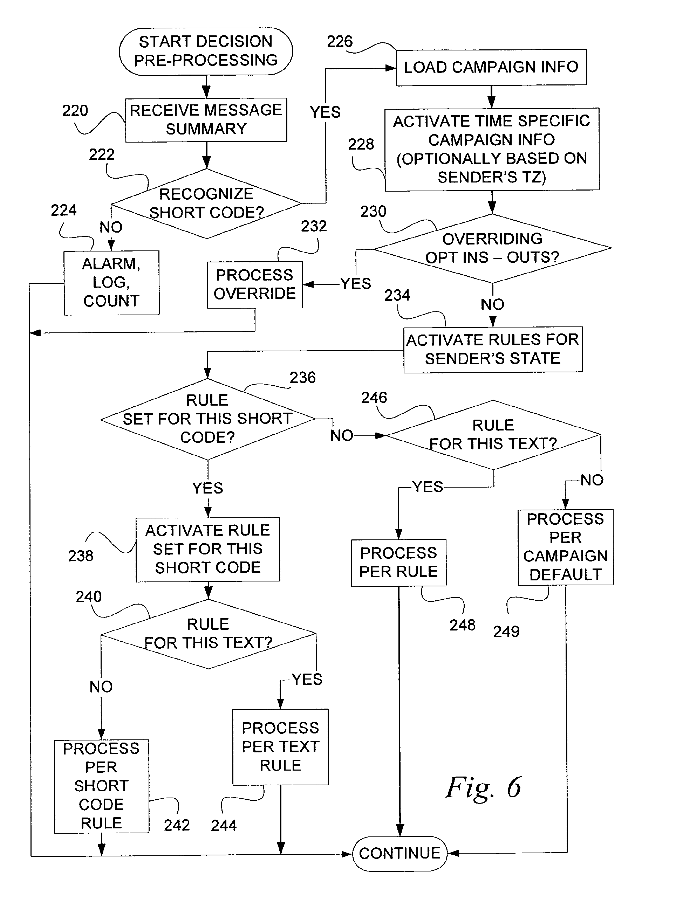

FIGURE 6 is a flow diagram illustrating exemplary logic for decision pre-processing in one embodiment of a high capacity campaign system. In this embodiment, decision processing may be generally divided into broad sub-processes comprising incoming queuing, message processing, master-slave synchronization, outgoing queuing, and command processing. As discussed above, an incoming queue comprises messages that the decision module has accepted but not yet processed. Similarly, the outgoing queue comprises replies that are to be sent to participating subscribers, but have not yet been sent to the outgoing transport module or to the carrier. Message processing is generally implemented as a state machine. Some extra-state information for subscribers may be maintained, and some message processing may be independent of the state of the subscriber. In addition, the decision module generally maintains subscriber-independent counters, which may be both campaign-specific and campaign-independent.

At an operation 220, the decision module receives a message summary from the inbound transport module and performs input queuing and/or other pre-processing. The incoming queue may comprise a set of pending bytes that have been read from the network but have not yet been interpreted as messages, logged, or otherwise processed. Thus, the incoming queuing sub-process may have to wait until a full message summary is received. Each message summary from the transport element is generally copied once into memory. Other operations involving that message summary (including logging it to disk and performing decision logic) will generally use the same memory location.

The decision module evaluates the message summary to determine whether the message summary includes any recognized short code, at a decision operation 222. If the message summary does not include a recognized short code, the decision module sets an alarm, logs an error, increments an error count, and/or performs other air processing and an operation 224. The decision module may end further decision processing. Similar error processing may also be performed at other stages of the message processing system. For example the inbound transport module may detect a loss of communication with a decision module, set an alarm, and try to re-establish communication with that decision module, or initiate a transfer of control to a slave decision module as a new master decision module.

If the message summary includes a recognized short code, the decision module loads campaign information at an operation 226. The message summary may comprise a command to load initial campaign information and/or additional campaign information. At an operation 228, the decision module activates time specific campaign information, such as vote selections that may be based on the subscriber's time zone. And the decision operation 230, the decision module determines whether the message summary indicates an override of previous op-in or op-out selections. For example, the subscriber may have previously selected to opt into all campaigns. The received message summary may indicate a new selection to opt out of future campaigns. If the message summary indicates an override of a previous and/or default opt-in or opt-out setting, the decision module or another module processes the message summary at an operation 232 for overriding the setting. If no override is indicated, the decision module accesses one or more rules for processing the subscriber's state, at an operation 234. Overrides may also be applied within the message summary processing described below. The sender's opt-in and -out status can override any part of a rule, including causing different state changes or suppressing any state change, or changing or suppressing any messages (e.g., replies or follow-on replies) generated by the applied rule.

At a decision operation 236, the decision module determines whether a rules set is available and applicable for the short code in the message summary. If a rules set is available for the short code, the decision module accesses the rules set at an operation 238. The decision module then determines, at a decision operation 240, whether a rule is available and applicable for the text of the message. If the text rule is not available and/or applicable to the text, the decision module processes the message summary according to the accessed short code rule, at an operation 242. However, if a text rule is available and or applicable, the decision module processes the message summary according to the text rule, at an operation 244.

If a rules set was not associated with the received short code, the decision module determines, at a decision operation 246, whether a rule is available and/or applicable based only on the text of the message. If a text rule is available and or applicable, the decision module processes the message summary according to the text rule, at an operation 248. However, if a text rule is not available and/or applicable, the decision module processes the message summary according to a campaign default, at an operation 249.

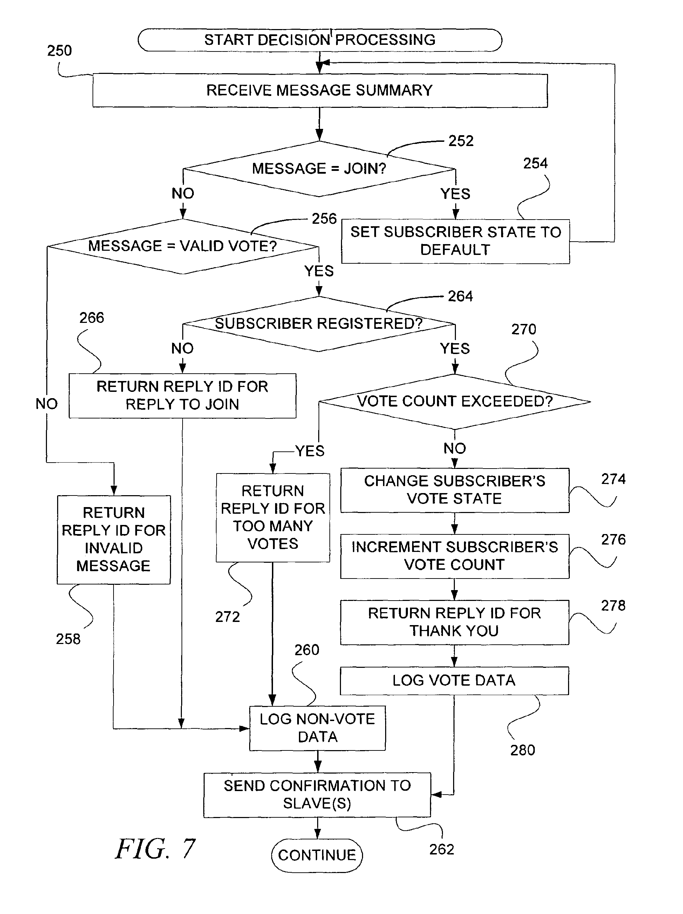

FIGURE 7 is a flow diagram illustrating exemplary logic for decision processing based on one or more rules in one embodiment of a high capacity campaign system. Generally in this embodiment, the master decision module performs the appropriate state change on the subscriber state data in memory for the subscriber who submitted the message. In most cases, the master decision module queues the appropriate reply message. The master decision module then communicates the change in subscriber state and message queue to each slave decision module for the traffic segment. The state change messages include both the transport-assigned ID of the message that prompted the state change and a decision module-assigned serial number of that message to allow the slave decision module to remove its copy of that notification from its incoming queue.

In more detail, one embodiment starts by receiving a message summary at an operation 250. In this example, the decision module determines, at a decision operation 252, whether the message text indicates a request to register to vote in the current campaign. If the text does indicate a request to register, the decision module may optionally determine whether the subscriber has previously registered. If the subscriber has previously registered, the decision module may change a state of the subscriber so that a reply informs the subscriber that the subscriber is already registered. If the subscriber is not yet register, the decision module establishes a new subscriber in memory and sets the subscriber state(s) to default values at an operation 254.

For those subscriber is that are already registered, the decision module evaluates the message summary at a decision operation 256 to determine whether the message text indicates a valid vote or other selection. If the selection is not valid, the decision module returns a reply identifier and/or queues a reply, at an operation 258, indicating that the received message was invalid. The decision module may then log information regarding the non-vote message at an operation 260. The decision module also sends a confirmation to the slave decision modules, confirming that the master decision module completed processing of the message summary.

If the received message summary indicates a valid selection, the decision module may check (or double check) at a decision operation 264 that the subscriber is registered. If the subscriber is not register, the decision module returns a reply at an operation 266, instructing the subscriber to register before the selection can be processed. This transaction is also logged and a confirmation sent to the slave decision modules. If the subscriber is registered, the decision module checks the subscriber's vote counting at a decision operation 270. If the subscriber's vote count is exceeded, the decision module returns a reply ID and an operation 272 for a reply message indicating that the subscriber has voted to many times. Again, the non-vote data is logged and a confirmation is sent to the slave decision modules.

If the subscriber's vote count is not exceeded, the master decision module updates the subscriber's vote state at an operation 274 based on the subscriber's vote. The state change may be by the following relationship:

$$(\text{Current State}) + (\text{Message Text}) + (\text{Short Code}) \Rightarrow \text{Reply} + (\text{State Change})$$

The state change may include one or a combination of various required and/or optional states. At an operation 276, the decision module increments the subscriber's vote count.

The decision module returns a reply ID at an operation 278 for of a reply message thanking the subscriber for participating. Follow-on reply may also be scheduled, such as an advertisement, and invitation to another campaign, information about a current leader in the campaign, and/or other information. In one embodiment, each decision module maintains a queue of reply messages bound for subscribers. It is beneficial that reply messages to a subscriber be delivered in order, relative to the messages submitted by the subscriber. To help ensure this sequencing, the outgoing queue may be in two parts. First is a list of mobile directory numbers (MDN)s, maintained in priority order. There may be a literal "retry next" component in the list, as well, to prevent excessive retries in short-queue conditions. Second is the set of reply messages to be sent to each MDN, in time order. The set of queued reply messages for each MDN generally includes a pointer to a reply message template, a pointer to any follow-on messages to be queued upon delivery of this reply message, and any replacement strings whose value is determined at the time the reply message is queued (e.g., "this is your $4^{th}$ vote"). The text substitution itself may occur when the reply message is forwarded to the outbound transport element. Priorities can also be applied. Lower-priority messages (incoming messages or reply messages) should not be delivered before higher-priority reply messages, and messages queued (or awaiting acknowledgement from the transport module) for one carrier should not prevent messages from being delivered to another carrier. The decision module may also load-balance outgoing traffic across the available outbound transport modules that can pass traffic to the target carrier. For example, the decision module may send reply traffic to the outbound transport module with the fewest outstanding messages.

In addition to processing the reply, the decision module logs the vote data at an operation 280 and sends a confirmation to the slave decision modules. Those skilled in the art will recognize that a variety of other rule processing logic may be used. In some embodiments, message processing logic may be dependent on the time the message was submitted, which may or may not be subscriber-centric time. Message processing may also be dependent on any number of opts in and out, which may be associated with the state of the subscriber. Blacklist status may be equivalent to having opted in (perhaps involuntarily) to the black list in question. Message processing may also be dependent on the number of state-changing messages received from the subscriber during the present campaign, and/or which messages have been sent to the subscriber during the present campaign. Any such state characteristics can be set before or during the campaign for any subscriber.

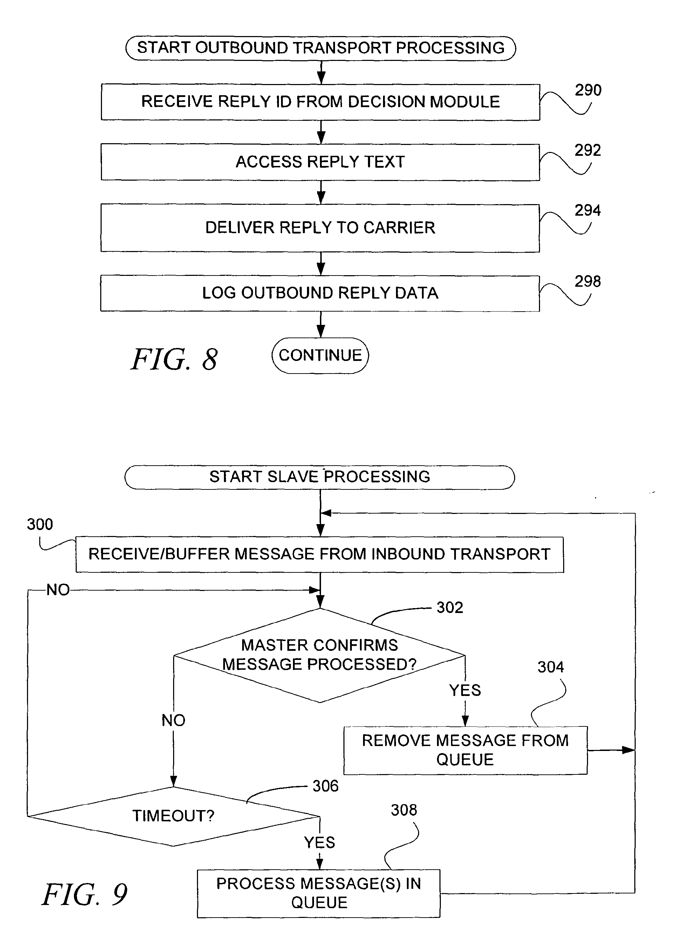

FIGURE 8 is a flow diagram illustrating exemplary logic for outbound transport processing in one embodiment of a high capacity campaign system. At an operation 290, the outbound transport module receives an instruction, such as a reply ID, from the decision module. The reply instruction is directed to the outbound transport module by way of the tag and/or message ID applied during inbound processing. If the reply text is not already accessed by the decision module, the outbound transport module accesses the reply text at an operation 292. In one embodiment, the outbound transport module prepares the reply text and any header information for the reply message. In another embodiment, the outbound transport module receives the reply text from the decision module and packetizes the reply. At an operation 294, the outbound transport module transmits the reply to the carrier for delivery to the subscriber.

The outbound transport module logs message data at an operation 298. For example, a packet ID, time stamp, reply message count, and/or other data may be logged. Similar to the inbound transport module, one embodiment of the outbound transport module may maintain two categories of count data; (i) messages received and message summaries sent, and (ii) acknowledgements sent or received. Examples include:

On the decision-module-side interface, outbound transport modules may keep the following statistics:

- total messages received
- total messages acknowledged (these acknowledgements occur after the transport element has attempted to deliver the message to the carrier)

- per-decision element messages received
- per-decision element messages acknowledged

On the carrier-side interface, outbound transport modules may maintain the following counts:

- total messages sent
- total messages acknowledged
- per-carrier messages sent
- per-carrier messages acknowledged
- per-bind messages sent
- per-bind messages acknowledged

As with the inbound transport module, the above counters are generally made available via TCP at a predefined port. The post-processing modules may connect to this port for billing, reporting, and/or other post processing.

FIGURE 9 is a flow diagram illustrating exemplary logic for slave processing in one embodiment of a high capacity campaign system. In this embodiment, each master decision module maintains a persistent connection to its corresponding slave (e.g., the slave that handles the same traffic segments as the master). Whenever a subscriber's state changes, or the outgoing queue changes (e.g., through an addition or a deletion), those changes are forwarded to the slave. Each notification includes information identifying the message that caused the change, including the message ID assigned by the inbound transport module. The notification may also include a serial number assigned by the decision module. When the slave decision module receives notification that a message has been processed by the master, the slave decision module removes that message from its inbound queue. In this embodiment, the slave's outbound queue is simply kept identical to the master's outbound queue. In addition, the master decision module periodically sends the state of all its counters (campaign-dependent and otherwise) to the slave decision module. These counter updates are time-stamped, and secondarily serve as a heartbeat to allow the slave decision module to determine when the communication link from the master is absent or excessively latent.

In a simplified embodiment, the slave decision module receives and buffers a message summary from the inbound transport module(s) and an operation 300. At the decision operation 302, the slave decision module determines whether the master decision module confirmed completion of message processing. If the master decision module confirmed completion, the slave decision module removes the message summary from its inbound queue at an operation 304. The slave decision module then awaits another message summary from the inbound transport module and/or another confirmation from the master decision module.

If a confirmation or other signal has not yet been received from the master decision module, the slave decision module determines whether a timeout period has elapsed, and a decision operation 306. If the timeout period has not elapsed, the slave decision module continues to await a confirmation, a heartbeat, or other signal. If the timeout period has elapsed, the slave decision module assumes that the master decision module has failed, and the slave decision module processes messages in its inbound queue at an operation 308. The message processing by the slave decision module is similar to the processes described above with respect to FIGURES 6-8.

Post-processing modules also perform administrative operations to generate bills, provide usage statistics, and/or other information. The post-processing modules may use databases without slowing the other message processing operations. Data from the various logs are also used. For example, a billing module may use the information passed from master to slave decision modules (e.g., user state changes and outbound queue updates). The billing module may also use information regarding which outgoing reply messages and state changes constitute billable events. This information may be kept as part of the campaign configuration, and may be included in the state and queue updates sent from the decision modules or read independently by the billing module. State and queue updates may be helpful, or even necessary, to provide the billing module with the incoming message feed (or equivalent) as well.

The billing modules may harvest the log files created by the decision modules and transferred by a periodic automated process to the billing modules. These files comprise the state change information, which the billing module may process into an appropriate format for a 3rd party application. After collecting the events for which billing will be performed, the billing element may perform carrier-specific delivery of the billing events within a predefined timeframe.

A system administrator may further use the high capacity campaign system to perform a number of administrative functions. For example, commands may be issued to each decision module via TCP on a predefined port. The following are examples of commands and parameters to which the decision module may respond:

- Stop
- Pause
- Flush queue in out
- Blacklist <MDN> <Campaign>|All

- Read <Campaign>|All
- Drop <Campaign>
- Be Slave Master
- Reset Stats <Campaign>|All
- Show Stats
- Loglevel
- Drop <MDN> <Campaign>
- Update <MDN> <Campaign> <New State>
- ResetCampaign <Campaign>|All
- Primary / Secondary status
- Load Config

The above specification, examples, and data provide a complete description of the manufacture and use of the composition of the invention. Many embodiments of the invention can be made without departing from the spirit and scope of the invention.

**Claims**

1. A method for processing a message, comprising:

   receiving an electronic message that is associated with a predefined segment of message traffic;
   creating a message summary based on the message, wherein the message summary encodes a traffic segment identifier that identifies the
   predefined segment of message traffic, and wherein the message summary encodes a user input included in the message;
   determining directly from the message summary that the user input comprises a predefined instruction to change a participation state that defines a message sender's participation in an activity that is conducted through an electronic communication network;
   changing the participation state of the message sender based on the user input if a predefined period has not elapsed, wherein the changed participation state indicates the message sender's selection of one of a plurality of options available to participants of the activity; and

   sending a reply to the message sender if the participation state is changed within the predefined period, wherein the reply is based at least in part on the changed participation state, and wherein the reply indicates that the participation state was changed.

2. The method of Claim 1, further comprising:

   causing a slave module to change the participation state based on the user input if the predefined period has elapsed; and
   causing the slave module to send the reply if the predefined period has elapsed.

3. The method of Claim 1, further comprising, notifying a slave module that the reply was sent, causing the slave module to remove the message summary from a slave queue of the slave module.

4. The method of Claim 1, wherein the message summary is a hash value of the message.

5. The method of Claim 1, wherein the traffic segment identifier is one of the following: an area code and a cellular tower identifier.

6. The method of Claim 1, wherein the participation state comprises a user state that indicates whether the user is registered to participate in the activity.

7. The method of Claim 1, wherein the participation state comprises a vote state that indicates the message sender's selection of one of a plurality of choices available to participants in the activity.

8. The method of Claim 1, further comprising:

determining a reply identifier based on the changed participation state;
accessing a reply text based on the reply identifier; and
creating the reply with the reply text.

9. The method of Claim 1, further comprising, prior to changing a participation state, determining a rules identifier from the message summary and accessing a rules set associated with the rules identifier, wherein the rules set defines rules for changing the participation state.

10. The method of Claim 1, further comprising, after sending the reply, performing a post process based on the message, wherein the post process includes operations that together require more time to complete than the steps of Claim 1.

11. A computer readable medium storing computer executable instructions that enable an electronic device to perform the actions of Claim 1.

12. A server for processing a message, comprising:

a communication interface in communication with an electronic message network;
a processor in communication with the communication interface; and
a memory in communication with the processor and storing machine readable instructions that cause the processor to perform a plurality of operations, including:

receiving an electronic message that is associated with a predefined segment of message traffic;
creating a message summary based on the message, wherein the message summary encodes a traffic segment identifier that identifies the predefined segment of message traffic, and wherein the message summary encodes a user input included in the message;
determining directly from the message summary that the user input comprises a predefined instruction to change a participation state that defines a message sender's participation in an activity that is conducted through an electronic communication network;
changing the participation state of the message sender based on the user input if a predefined period has not elapsed, wherein the changed participation state indicates the message sender's selection of one of a plurality of options available to participants of the activity; and
sending a reply to the message sender if the participation state is changed within the predefined period, wherein the reply is based at least in part on the changed participation state, and wherein the reply indicates that the participation state was changed.

13. The server of Claim 12, wherein the machine readable instructions further cause the processor to perform the operation of notifying a slave module that the reply was sent, causing the slave module to remove the message summary from a slave queue of the slave module.

14. The server of Claim 12, wherein the activity comprises voting for a candidate of a contest.

15. The server of Claim 12, wherein the message sender receives information about the activity through a communication system other than the electronic network.

16. The server of Claim 12, wherein the message comprises a text message received through a cellular telephone network.

17. A system for processing a message, comprising:

a master inbound transport module in communication with an electronic network and performing a plurality of operations, including:

receiving via the electronic network an electronic message; determining that the message is associated with a predefined segment of message traffic, wherein the master inbound transport module is preconfigured to accept only messages that are associated with the predefined segment of message traffic; and
creating a message summary based on the message, wherein the message summary encodes a traffic segment identifier that identifies the predefined segment of message traffic, and wherein the message summary encodes a user input included in the message;

a master decision module coupled to the master inbound transport module and performing a plurality of operations, including:

determining directly from the message summary that the user input comprises a predefined instruction to change a participation state that defines a message sender's participation in an activity that is conducted through through electronic communication network; and
changing the participation state of the message sender based on the user input if a predefined period has not elapsed, wherein the changed participation state indicates the message sender's selection of one of a plurality of options available to participants of the activity; and
a master outbound transport module coupled to the master decision module and performing a plurality of operations, including:

sending a reply to the message sender if the participation state is changed within the predefined period, wherein the reply is based at least in part on the changed participation state, and wherein the reply indicates that the participation state was changed.

18. The system of Claim 17, further comprising:

a slave inbound transport module in communication with the electronic network and performing a plurality of operations, including:

receiving via the electronic network an electronic message copy;
determining that the message copy is associated with the predefined segment of message traffic, wherein the slave inbound transport module is preconfigured to accept only messages that are associated with the predefined segment of message traffic; and
creating a message summary copy based on the message copy, wherein the message summary copy encodes a traffic segment identifier copy that identifies the predefined segment of message traffic, and wherein the message summary copy encodes a user input copy included in the message copy;
a slave decision module coupled to the slave inbound transport module, coupled to the master decision module, and performing a plurality of operations, including:

determining whether the predefined period has elapsed; and if the predefined period has elapsed, performing the operations of:

determining directly from the message summary copy that the user input copy comprises the predefined instruction to change a participation state copy that defines the message sender's participation in the activity that is conducted through the electronic communication network; and
changing the participation state copy of the message sender based on the user input copy, if the predefined period has elapsed, wherein the changed participation state copy indicates the message sender's selection of one of the plurality of options available to participants of the activity; and
a slave outbound transport module coupled to the slave decision module and performing a plurality of operations, including:
sending the reply to the message sender, if the predefined period has elapsed, wherein the reply is based at least in part on the changed participation state copy, and wherein the reply indicates that the participation state copy was changed.

19. The system of Claim 17, wherein if the predefined period has not elapsed, the slave decision module performs the operations of:

receiving a notice from the master decision module that the reply was sent; and
discarding the message summary copy.

20. The system of Claim 17, further comprising a master post processor coupled to the master decision module and performing a plurality of operations, including:

receiving a notice that the reply was sent, if the predefined period has not elapsed; and
updating a database entry associated with the message sender, if the predefined period has not elapsed.

**Fig. 1**

Fig. 2

EP 1 901 501 A2

# HCS Event Flow

*Fig. 3*

START SETUP

RECEIVE CAMPAIGN DATA FROM CARRIER(S)
(E.G., SHORT CODE(S), SELECTION OPTIONS, ETC.) — 200

ASSOCIATE SHORT CODE WITH TRANSPORT(S) &
DECISION MODULES WITH TRAFFIC IDENTIFICATION CODES — 202

DEFINE SELECTION CODES & CAMPAIGN RULES — 204

LOAD STATE DATA FOR EXISTING SUBCRIBERS — 206

*Fig. 4*　　CONTINUE

START INBOUND TRANSPORT PROCESSING

RECEIVE MESSAGE FROM CARRIER — 210

DETERMINE MESSAGE SUMMARY FROM MESSAGE DATA — 212

TAG MESSAGE SUMMARY WITH TRANSPORT ID FOR REPLY ROUTE — 214

ROUTE MESSAGE SUMMARY TO ASSOCIATED
MASTER DECISION MODULE &
SLAVE DECISION MODULE(S) — 216

LOG MESSAGE DATA
(E.G., PACKET ID, TIME STAMP, COUNT, ETC.) — 218

*Fig. 5*　　CONTINUE

START DECISION
PRE-PROCESSING

226

LOAD CAMPAIGN INFO

220 RECEIVE MESSAGE
SUMMARY

YES

ACTIVATE TIME SPECIFIC
CAMPAIGN INFO
(OPTIONALLY BASED ON
SENDER'S TZ)

228

222

RECOGNIZE
SHORT CODE?

224

NO

232

230

OVERRIDING
OPT INS – OUTS?

ALARM,
LOG,
COUNT

PROCESS
OVERRIDE

YES

234

NO

ACTIVATE RULES FOR
SENDER'S STATE

236

RULE
SET FOR THIS SHORT
CODE?

246

RULE
FOR THIS TEXT?

NO

NO

YES

YES

ACTIVATE RULE
SET FOR THIS
SHORT CODE

238

PROCESS
PER RULE

PROCESS
PER
CAMPAIGN
DEFAULT

240

RULE
FOR THIS TEXT?

248

249

NO

YES

*Fig. 6*

PROCESS
PER
SHORT
CODE
RULE

PROCESS
PER TEXT
RULE

242  244

CONTINUE

FIG. 7

START OUTBOUND TRANSPORT PROCESSING

RECEIVE REPLY ID FROM DECISION MODULE — 290

ACCESS REPLY TEXT — 292

DELIVER REPLY TO CARRIER — 294

LOG OUTBOUND REPLY DATA — 298

*FIG. 8*    CONTINUE

START SLAVE PROCESSING

300 — RECEIVE/BUFFER MESSAGE FROM INBOUND TRANSPORT

NO

MASTER CONFIRMS MESSAGE PROCESSED? — 302

YES

NO

REMOVE MESSAGE FROM QUEUE — 304

TIMEOUT? — 306

YES

308

*FIG. 9*    PROCESS MESSAGE(S) IN QUEUE